(19) Europäisches Patentamt / European Patent Office / Office européen des brevets

(11) **EP 4 233 257 B1**

(12) **EUROPEAN PATENT SPECIFICATION**

(45) Date of publication and mention of the grant of the patent:
**17.06.2026 Bulletin 2026/25**

(21) Application number: **21806816.1**

(22) Date of filing: **21.10.2021**

(51) International Patent Classification (IPC):
**H04W 68/02** *(2009.01)* **H04L 5/00** *(2006.01)*

(52) Cooperative Patent Classification (CPC):
**H04L 5/0053; H04L 5/0051;** H04W 68/02;
Y02D 30/70

(86) International application number:
**PCT/IB2021/059697**

(87) International publication number:
**WO 2022/084896 (28.04.2022 Gazette 2022/17)**

(54) **TRACKING REFERENCE SIGNAL CONFIGURATION**

VERFOLGUNG EINER REFERENZSIGNALKONFIGURATION

CONFIGURATION DE SIGNAUX DE RÉFÉRENCE DE SUIVI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 US 202063094823 P**

(43) Date of publication of application:
**30.08.2023 Bulletin 2023/35**

(73) Proprietor: **Lenovo (Singapore) Pte. Ltd.**
**Singapore 556741 (SG)**

(72) Inventors:
• **JUNG, Hyejung**
  **Northbrook, Illinois 60062 (US)**
• **NANGIA, Vijay**
  **Woodridge, Illinois 60517 (US)**

(74) Representative: **Openshaw & Co.**
**8 Castle Street**
**Farnham, Surrey GU9 7HR (GB)**

(56) References cited:
• **CATT: "Configuration of TRS/CSI-RS for paging enhancement", vol. RAN WG1, no. e-Meeting; 20200817 - 20200828, 8 August 2020 (2020-08-08), XP051917695, Retrieved from the Internet <URL:https://ftp.3gpp.org/tsg_ran/WG1_RL1/TSGR1_102-e/Docs/R1-2005720.zip R1-2005720.docx> [retrieved on 20200808]**

• **MODERATOR (SAMSUNG): "Summary for TRS/CSI-RS occasion(s) for idle/inactive UEs", vol. RAN WG1, no. e-Meeting; 20200817 - 20200828, 10 September 2020 (2020-09-10), XP051934135, Retrieved from the Internet <URL:https://ftp.3gpp.org/tsg_ran/WG1_RL1/TSGR1_102-e/Docs/R1-2007475.zip R1-200xxxx_Draft_Summary_for_TRS_CSI-RS occasion(s) for idle_inactive_UEs_Phasel.docx> [retrieved on 20200910]**

• **SONY: "On TRS/CSI-RS occasion(s) for idle/inactive UEs", vol. RAN WG1, no. e-Meeting; 20200817 - 20200828, 7 August 2020 (2020-08-07), XP051917563, Retrieved from the Internet <URL:https://ftp.3gpp.org/tsg_ran/WG1_RL1/TSGR1_102-e/Docs/R1-2005583.zip R1-2005583 - Sony PowSavTRS.docx> [retrieved on 20200807]**

EP 4 233 257 B1

**Description**

FIELD

The subject matter disclosed herein relates generally to wireless communications and more particularly relates to tracking reference signal configuration.

BACKGROUND

In certain wireless communications networks, a user equipment may operate in an idle and/or an inactive mode. In such networks, the user equipment may operate with inefficiencies.

CATT, "Configuration of TRS/CSI-RS for paging enhancement", R1-2005720, 3GPP TSG RAN WG1 #102, e-Meeting, August 17th - 28th, 2020, discusses TRS/CRS (tracking reference signal/ channel state information reference signal) configuration for paging enhancement for RRC-Idle/Inactive mode.

Moderator (Samsung), "Summary for TRS/CSI-RS occasion(s) for idle/inactive UEs", R1-2007475, 3GPP TSG RAN WG1 #102, e-Meeting, August 17th - 28th, 2020, provides a summary for the first round of email discussion on 102-e-NR-UE_pow_sav_enh-02] Email discussion/approval - Taehyoung (Samsung).

BRIEF SUMMARY

The invention is defined by the appended independent claims.

Methods for tracking reference signal configuration are disclosed. Apparatuses and systems also perform the functions of the methods. One embodiment of a method is defined in claim 10.

One apparatus for tracking reference signal configuration includes a user equipment according to claim 1. Further embodiments are defined in the dependent claims.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a schematic block diagram illustrating one embodiment of a wireless communication system for tracking reference signal configuration;
Figure 2 is a schematic block diagram illustrating one embodiment of an apparatus that may be used for tracking reference signal configuration;
Figure 3 is a schematic block diagram illustrating one embodiment of an apparatus that may be used for tracking reference signal configuration;
Figure 4 is a schematic block diagram illustrating one embodiment of a TRS-ResourceSetCommon IE;
Figure 5 is a schematic block diagram illustrating another embodiment of a TRS-ResourceSetCommon IE;
Figure 6 is a schematic block diagram illustrating one embodiment of a TRS-ResourceMapping IE;
Figure 7 is a flow chart diagram illustrating one embodiment of a method for tracking reference signal configuration; and
Figure 8 is a flow chart diagram illustrating another embodiment of a method for tracking reference signal configuration.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

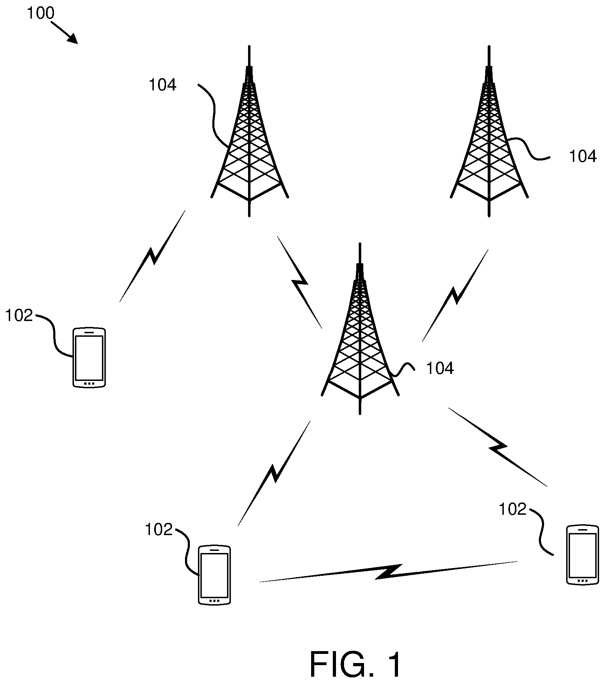

Figure 1 depicts an embodiment of a wireless communication system 100 for tracking reference signal configuration. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth®, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive a tracking reference signal configuration. In some embodiments, the remote unit 102 may receive a tracking reference signal on a tracking reference signal occasion of a plurality of tracking reference signal occasions. The plurality of tracking reference signal occasions is based on the tracking reference signal configuration. In certain embodiments, the remote unit 102 may monitor a paging physical downlink control channel on at least one paging physical downlink control channel monitoring occasion based on the tracking reference signal. The at least one paging physical downlink control channel monitoring occasion is associated with the tracking reference signal occasion. Accordingly, the remote unit 102 may be used for tracking reference signal configuration.

In certain embodiments, a network unit 104 may transmit a tracking reference signal configuration. A plurality of tracking reference signal occasions is based on the tracking reference signal configuration. In some embodiments, the network unit 104 may transmit a tracking reference signal on a tracking reference signal occasion of the plurality of tracking reference signal occasions. In certain embodiments, the network unit 104 may transmit data on a paging physical downlink control channel on at least one paging physical downlink control channel monitoring occasion based on the tracking reference signal. The at least one paging physical downlink control channel monitoring occasion is associated with the tracking reference signal occasion. Accordingly, the network unit 104 may be used for tracking reference signal configuration.

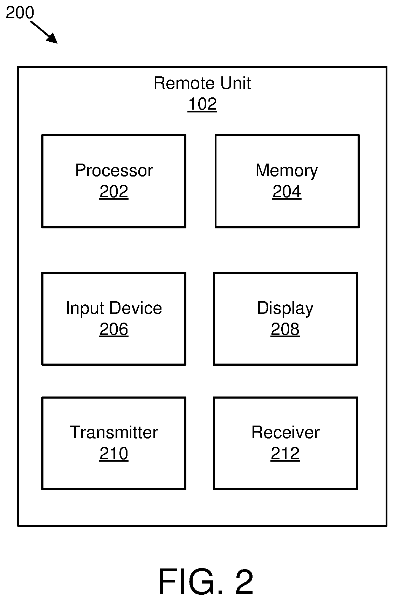

Figure 2 depicts one embodiment of an apparatus 200 that may be used for tracking reference signal configuration. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the receiver 212: receives a tracking reference signal configuration; and receives a tracking reference signal on a tracking reference signal occasion of a plurality of tracking reference signal occasions. The plurality of tracking reference signal occasions is based on the tracking reference signal configuration. In various embodiments, the processor 202 monitors a paging physical downlink control channel on at least one paging physical downlink control channel monitoring occasion based on the tracking reference signal. The at least one paging physical downlink control channel monitoring occasion is associated with the tracking reference signal occasion.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

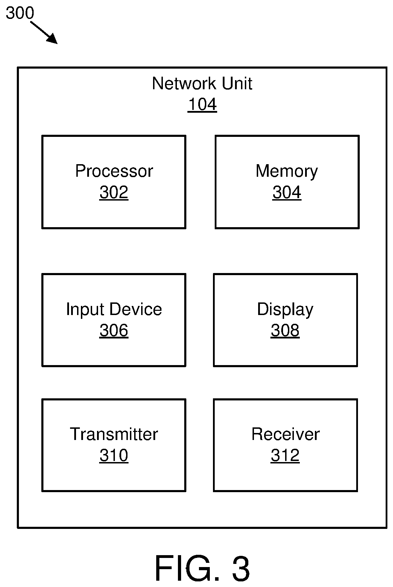

Figure 3 depicts one embodiment of an apparatus 300 that may be used for tracking reference signal configuration. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the transmitter 310: transmits a tracking reference signal configuration, wherein a plurality of tracking reference signal occasions is based on the tracking reference signal configuration; transmits a tracking reference signal on a tracking reference signal occasion of the plurality of tracking reference signal occasions; and transmits data on a paging physical downlink control channel on at least one paging physical downlink control channel monitoring occasion based on the tracking reference signal. The at least one paging physical downlink control channel monitoring occasion is associated with the tracking reference signal occasion.

In certain embodiments, before an idle or inactive mode user equipment ("UE") monitors paging downlink control information ("DCI") on a paging occasion, the UE may have to perform measurements on at least one synchronization signal ("SS") physical broadcast channel ("PBCH") ("SS/PBCH") block ("SSB") of a camped cell to achieve necessary time and frequency synchronization, to select a suitable SSB, and to determine a paging DCI monitoring occasion corresponding to the selected SSB. In such embodiments, multiple SSB measurements may be needed if the UE is operated in a low signal-to-interference and noise ratio ("SINR") condition. Further, in some embodiments, a certain SSB and paging configurations may result in a large time difference between an SSB occasion and a paging occasion for a UE, which may deteriorate time, frequency, and/or beam tracking accuracy. Thus, in such embodiments, it may be beneficial to provide additional reference signals ("RS") such as channel state information ("CSI") RS ("CSI-RS") occasions configured as tracking reference signal ("TRS") to an idle and/or inactive UE so that the idle and/or inactive UE may use those additional RS for automatic gain control ("AGC") setting, time and/or frequency tracking, and/or radio resource management ("RRM") measurement for a serving cell.

In various embodiments, there are methods to provide additional RS to idle and/or inactive UEs for UE power saving and improved time, frequency, and/or beam tracking.

In certain embodiments, an availability of TRS/CSI-RS on a TRS/CSI-RS occasion associated with a paging occasion implicitly indicates whether paging DCI and/or paging PDSCH is transmitted or not. In such embodiments, a UE has to perform blind detection of TRS/CSI-RS, and missed detection of TRS/CSI-RS leads to missed paging.

In some embodiment, paging DCI indicates an availability of TRS/CSI-RS and also indicates an updated configuration of TRS/CSI-RS. In such embodiments, a UE cannot perform TRS/CSI-RS based time/frequency tracking before decoding paging DCI.

In various embodiments, PPS-PDCCH that indicates whether to monitor paging DCI in one or more paging occasions of one or more DRX cycles was proposed. An RNTI used for scrambling CRC in PPS-PDCCH is determined based on at least one selected from a Paging Frame index, a Paging Occasion index, and a UE ID.

The CSI-RS may be defined and may be used for time/frequency tracking, CSI computation, L1-RSRP computation, L1-SINR computation and mobility.

For a CSI-RS resource associated with a NZP-CSI-RS-ResourceSet with the higher layer parameter repetition set to 'on', the UE shall not expect to be configured with CSI-RS over the symbols during which the UE is also configured to monitor the CORESET, while for other NZP-CSI-RS-ResourceSet configurations, if the UE is configured with a CSI-RS resource and a search space set associated with a CORESET in the same OFDM symbol(s), the UE may assume that the CSI-RS and a PDCCH DM-RS transmitted in all the search space sets associated with CORESET are quasi co-located with 'QCL-TypeD', if 'QCL-TypeD' is applicable. This also applies to the case when CSI-RS and the CORESET are in different intra-band component carriers, if 'QCL-TypeD' is applicable. Furthermore, the UE shall not expect to be configured with the CSI-RS in PRBs that overlap those of the CORESET in the OFDM symbols occupied by the search space set(s).

The UE is not expected to receive CSI-RS and SIB1 message in the overlapping PRBs in the OFDM symbols where SIB1 is transmitted.

If the UE is configured with DRX, 1) if the UE is configured to monitor DCI format 2_6 and configured by higher layer parameter ps-TransmitOtherPeriodicCSI to report CSI with the higher layer parameter reportConfigType set to 'periodic' and reportQuantity set to quantities other than 'cri-RSRP' and 'ssb-Index-RSRP' when drx-onDurationTimer is not started, the most recent CSI measurement occasion occurs in DRX active time or during the time duration indicated by drx-onDurationTimer also outside DRX active time for CSI to be reported; 2) if the UE is configured to monitor DCI format 2_6 and configured by higher layer parameter ps-TransmitPeriodicL1-RSRP to report L1-RSRP with the higher layer parameter reportConfigType set to 'periodic' and reportQuantity set to cri-RSRP when drx-onDurationTimer is not started, the most recent CSI measurement occasion occurs in DRX active time or during the time duration indicated by drx-onDurationTimer also outside DRX active time for CSI to be reported; 3) otherwise, the most recent CSI measurement occasion occurs in DRX active time for CSI to be reported.

A UE in RRC connected mode is expected to receive the higher layer UE specific configuration of a NZP-CSI-RS-ResourceSet configured with higher layer parameter trs-Info.

For a NZP-CSI-RS-ResourceSet configured with the higher layer parameter trs-Info, the UE shall assume the antenna port with the same port index of the configured NZP CSI-RS resources in the NZP-CSI-RS-ResourceSet is the same.

For frequency range 1, the UE may be configured with one or more NZP CSI-RS set(s), where a NZP-CSI-RS-ResourceSet consists of four periodic NZP CSI-RS resources in two consecutive slots with two periodic NZP CSI-RS resources in each slot. If no two consecutive slots are indicated as downlink slots by tdd-UL-DL-ConfigurationCommon or tdd-UL-DL-ConfigDedicated, then the UE may be configured with one or more NZP CSI-RS set(s), where a NZP-CSI-RS-ResourceSet consists of two periodic NZP CSI-RS resources in one slot.

For frequency range 2 the UE may be configured with one or more NZP CSI-RS set(s), where a NZP-CSI-RS-ResourceSet consists of two periodic CSI-RS resources in one slot or with a NZP-CSI-RS-ResourceSet of four periodic NZP CSI-RS resources in two consecutive slots with two periodic NZP CSI-RS resources in each slot.

A UE configured with NZP-CSI-RS-ResourceSet(s) configured with higher layer parameter trs-Info may have the CSI-RS resources configured as: 1) Periodic, with the CSI-RS resources in the NZP-CSI-RS-ResourceSet configured with same periodicity, bandwidth and subcarrier location; 2) Periodic CSI-RS resource in one set and aperiodic CSI-RS resources in a second set, with the aperiodic CSI-RS and periodic CSI-RS resource having the same bandwidth (with same RB location) and the aperiodic CSI-RS being 'QCL-Type-A' and 'QCL-TypeD', where applicable, with the periodic CSI-RS resources. For frequency range 2, the UE does not expect that the scheduling offset between the last symbol of the PDCCH carrying the triggering DCI and the first symbol of the aperiodic CSI-RS resources is smaller than the UE reported beamSwitchTiming, when the reported value is one of the values of {14, 28, 48}. The UE shall expect that the periodic CSI-RS resource set and aperiodic CSI-RS resource set are configured with the same number of CSI-RS resources and with the same number of CSI-RS resources in a slot. For the aperiodic CSI-RS resource set if triggered, and if the associated periodic CSI-RS resource set is configured with four periodic CSI-RS resources with two consecutive slots with two periodic CSI-RS resources in each slot, the higher layer parameter aperiodic Triggering Offset indicates the triggering offset for the first slot for the first two CSI-RS resources in the set.

A UE does not expect to be configured with a CSI-ReportConfig that is linked to a CSI-ResourceConfig containing an NZP-CSI-RS-ResourceSet configured with trs-Info and with the CSI-ReportConfig configured with the higher layer parameter timeRestrictionForChannelMeasurements set to 'configured'.

A UE does not expect to be configured with a CSI-ReportConfig with the higher layer parameter reportQuantity set to other than 'none' for aperiodic NZP CSI-RS resource set configured with trs-Info.

A UE does not expect to be configured with a CSI-ReportConfig for periodic NZP CSI-RS resource set configured with trs-Info.

A UE does not expect to be configured with a NZP-CSI-RS-ResourceSet configured both with trs-Info and repetition.

Each CSI-RS resource is configured by the higher layer parameter NZP-CSI-RS-Resource with the following restrictions: 1) the time-domain locations of the two CSI-RS resources in a slot, or of the four CSI-RS resources in two consecutive slots (which are the same across two consecutive slots), as defined by higher layer parameter CSI-RS-resourceMapping, is given by one of;

a) $l \in \{4,8\}$, $l \in \{5,9\}$, or $l \in \{6,10\}$ for frequency range 1 and frequency range 2, b) $l \in \{0,4\}$, $l \in \{1,5\}$, $l \in \{2,6\}$, $l \in \{3,7\}$, $l \in \{7,11\}$, $l \in \{8,12\}$ or $l \in \{9,13\}$ for frequency range 2; 2) a single port CSI-RS resource with density $\rho = 3$ given by a predetermined table and higher layer parameter density configured by CSI-RS-ResourceMapping; 3) if carrier

$$N_{\text{grid}}^{\text{size},\mu} = 52, \text{N}_{\text{BWP,i}}^{\text{size}} = 52,\ \mu = 0$$ and the carrier is configured in paired spectrum, the bandwidth of the CSI-RS resource, as given by the higher layer parameter freqBand configured by CSI-RS-ResourceMapping, is X resource blocks, where $X \geq 28$ resources if the UE indicates trs-AddBW-Set1 for the trs-AdditionalBandwidth-r16 capability and $X \geq 32$ if the UE indicates trs-AddBW-Set2 for the AdditionalBandwidth-r16 capability; in these cases, if the UE is configured with CSI-RS comprising X<52 resource blocks, the UE does not expect that the total number of PRBs allocated for DL transmissions but not overlapped with the PRBs carrying CSI-RS for tracking is more than 4, where all CSI-RS resource configurations shall span the same set of resource blocks; otherwise, the bandwidth of the CSI-RS resource, as given by the higher layer parameter freqBand configured by CSI-RS-ResourceMapping, is the minimum of 52 and $\text{N}_{\text{BWP,i}}^{\text{size}}$ resource blocks, or is equal

to $\text{N}_{\text{BWP,i}}^{\text{size}}$ resource blocks. For operation with shared spectrum channel access, freqBand configured by CSI-RS-ResourceMapping, is the minimum of 48 and

$\text{N}_{\text{BWP,i}}^{\text{size}}$ resource blocks, or is equal to $\text{N}_{\text{BWP,i}}^{\text{size}}$ resource

blocks. The UE is not expected to be configured with the periodicity of $2^{\mu} \times 10$ slots if the bandwidth of CSI-RS resource is larger than 52 resource blocks. The periodicity and slot offset for periodic NZP CSI-RS resources, as given by the higher layer parameter periodicityAndOffset configured by NZP-CSI-RS-Resource, is one of $2^{\mu}X_p$ slots where $X_p = 10, 20, 40,$ or $80$ and where $\mu$ is defined. The same powerControlOffset and powerControlOffsetSS is given by a NZP-CSI-RS-Resource value across all resources.

If a UE is configured with a NZP-CSI-RS-ResourceSet configured with the higher layer parameter repetition set to 'on', the UE may assume that the CSI-RS resources within the NZP-CSI-RS-ResourceSet are transmitted with the same downlink spatial domain transmission filter, where the CSI-RS resources in the NZP-CSI-RS-ResourceSet are transmitted in different OFDM symbols. If repetition is set to 'off', the UE shall not assume that the CSI-RS resources within the NZP-CSI-RS-ResourceSet are transmitted with the same downlink spatial domain transmission filter.

If the UE is configured with a CSI-ReportConfig with reportQuantity set to "cri-RSRP", "cri-SINR" or "none" and if the CSI-ResourceConfig for channel measurement (higher layer parameter resourcesForChannelMeasurement) contains a NZP-CSI-RS-ResourceSet that is configured with the higher layer parameter repetition and without the higher layer parameter trs-Info, the UE can only be configured with the same number (1 or 2) of ports with the higher layer parameter nrofPorts for all CSI-RS resources within the set. If the UE is configured with the CSI-RS resource in the same OFDM symbol(s) as an SS/PBCH block, the UE may assume that the CSI-RS and the SS/PBCH block are quasi co-located with 'QCL-TypeD' if 'QCL-TypeD' is applicable. Furthermore, the UE shall not expect to be configured with the CSI-RS in PRBs that overlap with those of the SS/PBCH block, and the UE shall expect that the same subcarrier spacing is used for both the CSI-RS and the SS/PBCH block.

If a UE is configured with the higher layer parameter CSI-RS-Resource-Mobility and the higher layer parameter associatedSSB is not configured, the UE shall perform measurements based on CSI-RS-Resource-Mobility and the UE may base the timing of the CSI-RS resource on the timing of the serving cell.

If a UE is configured with the higher layer parameters CSI-RS-Resource-Mobility and associatedSSB, the UE may base the timing of the CSI-RS resource on the timing of the cell given by the cellId of the CSI-RS resource configuration. Additionally, for a given CSI-RS resource, if the associated SS/PBCH block is configured but not detected by the UE, the UE is not required to monitor the corresponding CSI-RS resource. The higher layer parameter isQuasiColocated indicates whether the associated SS/PBCH block given by the associatedSSB and the CSI-RS resource(s) are quasi co-located with respect to 'QCL-TypeD', when applicable.

If a UE is configured with the higher layer parameter CSI-RS-Resource-Mobility and with periodicity greater than 10 ms in paired spectrum, the UE may assume the absolute value of the time difference between radio frame i between any two cells, listed in the configuration with the higher layer parameter CSI-RS-CellMobility and with same refFreqCSI-RS, is less than 153600 Ts.

If the UE is configured with DRX, the UE is not required to perform measurement of CSI-RS resources other than during the active time for measurements based on CSI-RS-Resource-Mobility. When the UE is configured to monitor DCI format 2_6, the UE is not required to perform measurements other than during the active time and during the timer duration indicated by drx-onDurationTimer also outside active time based on CSI-RS-Resource-Mobility.

If the UE is configured with DRX and DRX cycle in use is larger than 80 ms, the UE may not expect CSI-RS resources are available other than during the active time for measurements based on CSI-RS-Resource-Mobility. If the UE is configured with DRX and configured to monitor DCI format 2_6 and DRX cycle in use is larger than 80ms, the UE may not expect that the CSI-RS resources are available other than during the active time and during the time duration indicated by drx-onDurationTimer also outside active time for measurements based on CSI-RS-Resource-Mobility. Otherwise, the UE may assume CSI-RS are available for measurements based on CSI-RS-Resource-Mobility.

A UE configured with the higher layer parameters CSI-RS-Resource-Mobility may expect to be configured: 1) with no more than 96 CSI-RS resources per higher layer parameter MeasObjectNR when all CSI-RS resources configured by the same higher layer parameter MeasObjectNR have been configured with associatedSSB, or, 2) with no more than 64 CSI-RS resources per higher layer parameter MeasObjectNR when all CSI-RS resources have been configured without associatedSSB or when only some of the CSI-RS resources have been configured with associatedSSB by the same higher layer parameter MeasObjectNR. For frequency range 1 the associatedSSB is optionally present for each CSI-RS resource. For frequency range 2 the associatedSSB is either present for all configured CSI-RS resources or not present for any configured CSI-RS resource per higher layer parameter MeasObjectNR. For any CSI-RS resource configuration, the UE shall assume that the value for parameter cdm-Type is 'noCDM', and there is only one antenna port.

The UE can be configured with one or more NZP CSI-RS resource set configuration(s) as indicated by the higher layer parameters CSI-ResourceConfig, and NZP-CSI-RS-ResourceSet. Each NZP CSI-RS resource set consists of K≥1 NZP CSI-RS resource(s).

The following parameters for which the UE shall assume non-zero transmission power for CSI-RS resource are configured via the higher layer parameter NZP-CSI-RS-Resource, CSI-ResourceConfig and NZP-CSI-RS-ResourceSet for each CSI-RS resource configuration: 1) nzp-CSI-RS-ResourceId determines CSI-RS resource configuration identity; 2) periodicityAndOffset defines the CSI-RS periodicity and slot offset for periodic/semi-persistent CSI-RS. All the CSI-RS resources within one set are configured with the same periodicity, while the slot offset can be same or different for different CSI-RS resources; 3) resourceMapping defines the number of ports, CDM-type, and OFDM symbol and subcarrier occupancy of the CSI-RS resource within a slot that is given; 4) nrofPorts in resourceMapping defines the number of CSI-RS ports, where the allowable values are given; 5) density in resourceMapping defines CSI-RS frequency density of each CSI-RS port per PRB, and CSI-RS PRB offset in case of the density value of 1/2, where the allowable values are given - for density 1/2, the odd/even PRB allocation indicated in density is with respect to the common resource block grid; 6) cdm-Type in resourceMapping defines CDM values and pattern, where the allowable values are given; 7) powerControlOffset: which is the assumed ratio of PDSCH EPRE to NZP CSI-RS EPRE when UE derives CSI feedback and takes values in the range of [-8, 15] dB with 1 dB step size; 8) powerControlOffsetSS: which is the assumed ratio of NZP CSI-RS EPRE to SS/PBCH block EPRE; 9) scramblingID defines scrambling ID of CSI-RS with length of 10 bits; 10) BWP-Id in CSI-ResourceConfig defines which bandwidth part the configured CSI-RS is located in; and 11) repetition in NZP-CSI-RS-ResourceSet is associated with a CSI-RS resource set and defines whether UE can assume the CSI-RS resources within the NZP CSI-RS Resource Set are transmitted with the same downlink spatial domain transmission filter or not and can be configured only when the higher layer parameter reportQuantity associated with all the reporting settings linked with the CSI-RS resource set is set to 'cri-RSRP', 'cri-SINR' or 'none'; 12) qcl-InfoPeriodicCSI-RS contains a reference to a TCI-State indicating QCL source RS(s) and QCL type(s) - if the TCI-State is configured with a reference to an RS with 'QCL-TypeD' association, that RS may be an SS/PBCH block located in the same or different CC/DL BWP or a CSI-RS resource configured as periodic located in the same or different CC/DL BWP; and 13) trs-Info in NZP-CSI-RS-ResourceSet is associated with a CSI-RS resource set and for which the UE can assume that the antenna port with the same port index of the configured NZP CSI-RS resources in the NZP-CSI-RS-ResourceSet and can be configured when reporting setting is not configured or when the higher layer parameter reportQuantity associated with all the reporting settings linked with the CSI-RS resource set is set to 'none'.

All CSI-RS resources within one set are configured with same density and same nrofPorts, except for the NZP CSI-RS resources used for interference measurement.

The UE expects that all the CSI-RS resources of a resource set are configured with the same starting RB and number of RBs and the same cdm-type.

The bandwidth and initial common resource block (CRB) index of a CSI-RS resource within a BWP, are determined based on the higher layer parameters nrofRBs and startingRB, respectively, within the CSI-FrequencyOccupation IE configured by the higher layer parameter freqBand within the CSI-RS-ResourceMapping IE. Both nrofRBs and startingRB are configured as integer multiples of 4 RBs, and the reference point for startingRB is CRB 0 on the common resource block grid.

If $startingRB < N_{BWP}^{start}$, the UE shall assume that the initial CRB index of the CSI-RS resource is $N_{initial\ RB} = N_{BWP}^{start}$, otherwise $N_{initial\ RB}$ = startingRB.

If $nrofRBs > N_{BWP}^{size} + N_{BWP}^{start} - N_{initial\ RB}$, the UE shall assume that the bandwidth of the CSI-RS resource is $N_{CSI-RS}^{BW} = N_{BWP}^{size} + N_{BWP}^{start} - N_{initial\ RB}$, otherwise $N_{CSI-RS}^{BW} = nrofRBs$. In all cases, the UE shall expect that $N_{CSI-RS}^{BW} \geq \min(24, N_{BWP}^{size})$.

The UE may use Discontinuous Reception (DRX) in RRC_IDLE and RRC_INACTIVE state in order to reduce power consumption. The UE monitors one paging occasion (PO) per DRX cycle. A PO is a set of PDCCH monitoring occasions and *can consist of multiple time slots (e.g. subframe or OFDM symbol) where* paging DCI can be sent. One Paging Frame (PF) is one Radio Frame and may contain one or multiple PO(s) or starting point of a PO.

In multi-beam operations, the UE assumes that the same paging message and the same Short Message are repeated in all transmitted beams and thus the selection of the beam(s) for the reception of the paging message and Short Message is up to UE implementation. The paging message is same for both RAN initiated paging and CN initiated paging.

The UE initiates RRC Connection Resume procedure upon receiving RAN initiated paging. If the UE receives a CN initiated paging in RRC_INACTIVE state, the UE moves to RRC_IDLE and informs NAS.

The PF and PO for paging are determined by the following formulae: SFN for the PF is determined by: (SFN + PF_offset) mod T = (T div N)*(UE_ID mod N).

Index (i_s), indicating the index of the PO is determined by: i_s = floor (UE_ID/N) mod Ns.

The PDCCH monitoring occasions for paging are determined according to pagingSearchSpace and firstPDCCH-MonitoringOccasionOfPO and nrofPDCCH-MonitoringOccasionPerSSB-InPO if configured. When SearchSpaceId = 0 is configured for paging-SearchSpace, the PDCCH monitoring occasions for paging are same as for RMSI.

When SearchSpaceId = 0 is configured for pagingSearchSpace, Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF.

When SearchSpaceId other than 0 is configured for pagingSearchSpace, the UE monitors the (i_s + 1)th PO. A PO is a set of 'S*X ' consecutive PDCCH monitoring occasions where 'S' is the number of actual transmitted SSBs determined according to ssb-PositionsInBurst in SIB1 and X is the nrofPDCCH-MonitoringOccasionPerSSB-InPO if configured or is equal to 1 otherwise. The [x*S+K]th PDCCH monitoring occasion for paging in the PO corresponds to the Kth transmitted SSB, where x=0,1,...,X-1, K=1,2,...,S. The PDCCH monitoring occasions for paging which do not overlap with UL symbols (determined according to tdd-UL-DL-ConfigurationCommon) are sequentially numbered from zero starting from the first PDCCH monitoring occasion for paging in the PF. When firstPDCCH-MonitoringOccasionOfPO is present, the starting PDCCH monitoring occasion number of (i_s + 1)th PO is the (i_s + 1)th value of the firstPDCCH-MonitoringOccasionOfPO parameter; otherwise, it is equal to i_s * S*X. If X > 1, when the UE detects a PDCCH transmission addressed to P-RNTI within its PO, the UE is not required to monitor the subsequent PDCCH monitoring occasions for this PO.

It should be noted that a PO associated with a PF may start in the PF or after the PF. Moreover, the PDCCH monitoring occasions for a PO can span multiple radio frames. When SearchSpaceId other than 0 is configured for paging-SearchSpace the PDCCH monitoring occasions for a PO can span multiple periods of the paging search space.

The following parameters are used for the calculation of PF and i_s above: 1) T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied); 2) N: number of total paging frames in T; 3) Ns: number of paging occasions for a PF; 4) PF_offset: offset used for PF determination; and 5) UE_ID: 5G-S-TMSI mod 1024.

Parameters Ns, nAndPagingFrameOffset, nrofPDCCH-MonitoringOccasionPerSSB-InPO, and the length of default DRX Cycle are signaled in SIB1. The values of N and PF_offset are derived from the parameter nAndPagingFrameOffset. The parameter first-PDCCH-MonitoringOccasionOfPO is signalled in SIB1 for paging in initial DL BWP. For paging in a DL BWP other than the initial DL BWP, the parameter first-PDCCH-MonitoringOccasionOfPO is signaled in the corresponding BWP configuration.

If the UE has no 5G-S-TMSI, for instance when the UE has not yet registered onto the network, the UE shall use as default identity UE_ID = 0 in the PF and i_s formulas above. 5G-S-TMSI is a 48 bit long bit string. 5G-S-TMSI shall in the formulae above be interpreted as a binary number where the left most bit represents the most significant bit.

In certain embodiments, a UE may be configured to monitor paging power saving ("PPS") physical downlink control channel ("PDCCH") ("PPS-PDCCH") with a periodicity the same as or of a multiple of a paging and/or discontinuous ("DRX") cycle, where the PPS-PDCCH can indicate not to monitor paging DCI or to monitor paging DCI over one or multiple paging and/or DRX cycles. In one example, if the UE does not receive a PPS-PDCCH, the UE monitors the paging DCI in a paging and/or DRX cycle. A UE may skip monitoring PPS-PDCCH on configured PPS-PDCCH monitoring occasions associated with UE's paging occasion in a given paging and/or DRX cycle if the UE has already determined whether to monitor paging DCI in the paging occasion of the given paging and/or DRX cycle by having received an indication to skip or not to skip monitoring the paging DCI in the given paging and/or DRX cycle.

In some embodiments, if more than one SS/PBCH block is transmitted in a cell, each PPS-PDCCH monitoring occasion of a set of PPS-PDCCH monitoring occasions is associated with a particular SS/PBCH block and/or a particular TRS and/or CSI-RS resource (e.g., a particular downlink beam), and a UE may need to monitor PPS-PDCCH only on PPS-PDCCH monitoring occasions associated with a selected SS/PBCH block, TRS resource, and/or CSI-RS resource.

In various embodiments, a network entity may or may not share TRS and/or CSI-RS occasions configured for connected mode UEs with idle and/or inactive mode UEs. Further, in certain embodiments, a network entity may or may not transmit TRS and/or CSI-RS in TRS and/or CSI-RS occasions. In one implementation, TRS and/or CSI-RS occasions are configured to be periodically occurring.

In some embodiments, a UE receives a cell-specific TRS configuration (e.g., TRS-ResourceSet-Common) via a system information block or via a dedicated RRC message (e.g., in a CellGroupConfig information element ("IE")). The cell-specific TRS configuration may include information about a plurality of paging frames and additionally a plurality of paging occasions in each paging frame of the plurality of paging frames for which the UE may receive associated TRSs. In various embodiments, a number of total paging frames in a paging and/or DRX cycle may be dependent on a SSB periodicity, as described in Example 1. In certain embodiments, whether a TRS is needed for time and frequency tracking may be dependent on a distance from a closest SSB occasion earlier than a paging PDCCH monitoring occasion of a paging occasion of a paging frame to the paging PDCCH monitoring occasion. In such embodiments, if the paging PDCCH monitoring occasion is far away from the closet SSB occasion in time, a network entity (e.g., gNB) may configure a TRS occasion associated with the paging PDCCH monitoring occasion. In one example, the TRS in the TRS occasion and the paging PDCCH demodulation ("DM") reference signal ("RS") ("DM-RS") in the paging PDCCH monitoring occasion are assumed to be quasi-collocated ("QCL") with respect to a first set of large-scale properties including one or more of delay spread, Doppler spread, Doppler shift, average gain, average delay, and spatial Rx parameters (e.g., 'QCL-TypeA': {Doppler shift, Doppler spread, average delay, delay spread} and 'QCL-TypeD': {Spatial Rx parameter}). The TRS and the closet SSB occasion may be assumed to be QCL with respect to a second set of large-scale properties (e.g., 'QCL-TypeC': {Doppler shift, average delay} and 'QCL-TypeD': {Spatial Rx parameter}). The QCL relationships may be indicated by indicating a transmission configuration indicator ("TCI") state ("TCI-State") providing the QCL source and QCL type.

In some embodiments, a TRS occasion may be associated with at least one paging PDCCH monitoring occasion of a paging occasion of a paging frame, where the paging occasion and the paging frame are from a plurality of paging occasions and a plurality of paging frames for which the UE may receive the associated TRS. Further, in such embodiments, the TRS occasion may have the same QCL information as the associated at least one paging PDCCH monitoring occasion. In one example, the TRS occasion and the associated at least one paging PDCCH monitoring occasion are quasi co-located with a particular SSB with respect to 'QCL-TypeD'. In an example shown herein as Example 2, the TRS occasion may be defined as a number of slot offsets (e.g., the parameter 'offset-PO') ahead of the earliest PDCCH monitoring occasion of the associated at least one PDCCH monitoring occasion. In another example shown herein as Example 3, the TRS occasion is determined based on a periodicity and/or a slot offset which may be configured taking into account a SSB periodicity, a DRX and/or paging cycle periodicity, a number of paging frames per DRX and/or paging cycle, and a number of paging occasions per paging frame. For example, TRS occasions may be configured as a set of periodic non-zero-power ("NZP") CSI-RS resources with a periodicity of 10, 20, 40, or 80 ms.

In various embodiments, frequency domain resource mapping information in a TRS resource set configuration is signaled once to apply all NZP-CSI-RS resources in the TRS resource set.

In certain embodiments, first time domain resource mapping information (e.g., an allocated orthogonal frequency division multiplexing ("OFDM") symbol) is signaled for a first NZP-CSI-RS resource, and a UE derives time domain resource mapping for remaining NZP-CSI-RS resources in a TRS resource set based on the first time domain resource mapping information. In an example, time-domain locations of the two NZP-CSI-RS resources in a slot, or of the four NZP-CSI-RS resources in two consecutive slots (e.g., which are the same across two consecutive slots) are given by one of 1) $l \in \{4,8\}$, $l \in \{5,9\}$, or $l \in \{6,10\}$ for frequency range 1 and frequency range 2; and 2) $l \in \{0,4\}$, $l \in \{1,5\}$, $l \in \{2,6\}$, $l \in \{3,7\}$, $l \in \{7,11\}$, $l \in \{8,12\}$ or $l \in \{9,13\}$ for frequency range 2.

In such embodiments, by receiving an indication of an earlier OFDM symbol, the UE may determine an OFDM symbol index of a later OFDM symbol.

In examples shown herein as Examples 2 and 3, it may be assumed that a powerControlOffset value and a powerControlOffsetSS value indicated in a TRS resource set apply across all NZP-CSI-RS resources in the TRS resource set.

In some embodiments, a UE may assume a single antenna port in each NZP-CSI-RS resource of a TRS resource set. Further, in such embodiments, the UE may assume that all the NZP-CSI-RS resources in the TRS resource set have the same antenna port.

In various embodiments, a network entity may dynamically switch between periodic and/or semi-persistent TRS and aperiodic TRS based on a given radio resource control ("RRC") configuration of a TRS resource set or based on two or more TRS resource set configurations (e.g., one set for periodic and another set for aperiodic) via DCI or medium access control ("MAC") control element ("CE") indication. Depending on a number of UEs camping in a cell (and its variation over time) and/or an average paging rate (and its variation over time) in a tracking area or a radio access network ("RAN") paging area, a network entity (e.g., gNB) may switch between a periodic and/or semi-persistent TRS operation and an aperiodic TRS operation. With dynamic switching, the gNB may adjust a TRS transmission overhead and/or an overhead of TRS availability indication as needed and may reduce a UE's burden to check the TRS availability indication.

In certain embodiments, a UE receives an indication that a TRS transmission is periodic (or semi-persistent) or aperiodic in a PPS-PDCCH. If the periodic and/or semi-persistent TRS is indicated, the UE may assume TRS is transmitted on configured TRS occasions over one or more DRX and/or paging cycles. If the aperiodic TRS is indicated, the UE may check an availability of the TRS on at least one configured TRS occasion. The UE may further receive availability information of the TRS on the at least one configured TRS in the PPS-PDCCH. In one example, a PPS-PDCCH monitoring occasion associated with a particular SSB of a cell may be configured for at least one DRX and/or paging cycle (e.g., the monitoring occasion occurs a few slots ahead of a start of the at least one DRX and/or paging cycle). One bit in the PPS-PDCCH intended to all UEs camping in a cell may indicate whether the TRS transmission is periodic or not. If the TRS transmission is indicated to be aperiodic, the UE assumes that a following bit field including X bits indicates availability of TRS on X paging frames (or X groups of paging frames) configured with TRS occasions (e.g., each bit of X-bits bitmap corresponds to a paging frame (or a group of paging frames) configured with the TRS occasion in a DRX and/or paging cycle).

In one example, the UE may assume that TRS is transmitted on a TRS occasion if the UE is indicated to monitor paging DCI on a paging PDCCH monitoring occasion associated with the TRS occasion. The UE may not measure TRS on the TRS occasion if the UE is indicated not to monitor paging DCI on the paging PDCCH monitoring occasion associated with the TRS occasion. In some embodiments, a UE monitors paging DCI on at least one paging PDCCH monitoring occasion associated with a TRS occasion if the UE is indicated that TRS is transmitted on the TRS occasion. In another example, the UE is separately indicated in a PPS-PDCCH for whether TRS is transmitted on a TRS occasion in a following at least one DRX cycle and for whether the UE has to monitor at least one paging PDCCH monitoring occasion in the following at least one DRX cycle.

In various embodiments, a UE receives information that a TRS transmission is periodic (or semi-persistent) or aperiodic in a paging DCI format detected in a first DRX and/or paging cycle. In such embodiments, the received information is applicable from a second DRX and/or paging cycle, where the second DRX and/or paging cycle starts later than the first DRX and/or paging cycle.

In some embodiments, a TRS configuration (e.g., TRS-ResourceSetCommon) includes a plurality of periodic NZP-CSI-RS resources and a plurality of aperiodic NZP-CSI-RS resources. In one example, all of the NZP-CSI-RS resources in the TRS-ResourceSet are configured with the same bandwidth and subcarrier location, and all the periodic NZP-CSI-RS resources are configured with the same periodicity. In another example, a powerControlOffset value and a powerControlOffsetSS value are separately configured for the periodic NZP-CSI-RS resources and the aperiodic NZP-CSI-RS resources, respectively.

In a first example (Example 1), there is a determination of a number of total paging frames (N) in a DRX and/or paging cycle (T). If pagingSearchSpace is set to zero and if SS/PBCH block and control resource set ("CORESET") multiplexing patterns are 2 or 3: 1) for ssbperiodicityServingCell of 5 or 10 ms, N can be set to one of {T, T/2, T/4, T/8, T/16}; 2) for ssbperiodicityServingCell of 20 ms, N can be set to one of {T/2, T/4, T/8, T/16}; 3) for ssbperiodicityServingCell of 40 ms, N can be set to one of {T/4, T/8, T/16}; 4) for ssbperiodicityServingCell of 80 ms, N can be set to one of {T/8, T/16}; and 5) for ssbperiodicityServingCell of 160 ms, N can be set to T/16. If paging Search Space is set to zero and if SS/PBCH block and CORESET multiplexing pattern is 1, N can be set to one of {T/2, T/4, T/8, T/16}. If pagingSearchSpace is not set to zero, N can be configured to one of {T, T/2, T/4, T/8, T/16}.

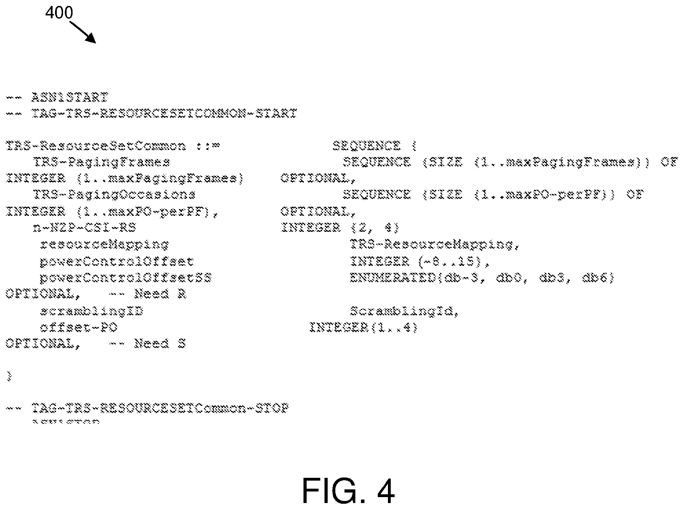

In a second example (Example 2), there may be a common parameter (TRS-ResourceSetCommon). The IE TRS-ResourceSetCommon is used to cell-specifically configure a set of NZP CSI-RS resources in the cell where the IE is included which an idle or inactive UE may be configured to measure on. A change of configuration between periodic and aperiodic for a TRS-ResourceSetCommon may be supported. Figure 4 is a schematic block diagram 400 illustrating one embodiment of a TRS-ResourceSetCommon IE. In Figure 4, n-NZP-CSI-RS may be a total number of NZP-CSI-RS resources in a TRS resource set; powerControlOffset may be a power offset of physical downlink shared channel ("PDSCH") resource element ("RE") to NZP CSI-RS RE with a value in dB; and powerControlOffsetSS may be a power offset of NZP CSI-RS RE to secondary synchronization signal ("SSS") RE with a value in dB.

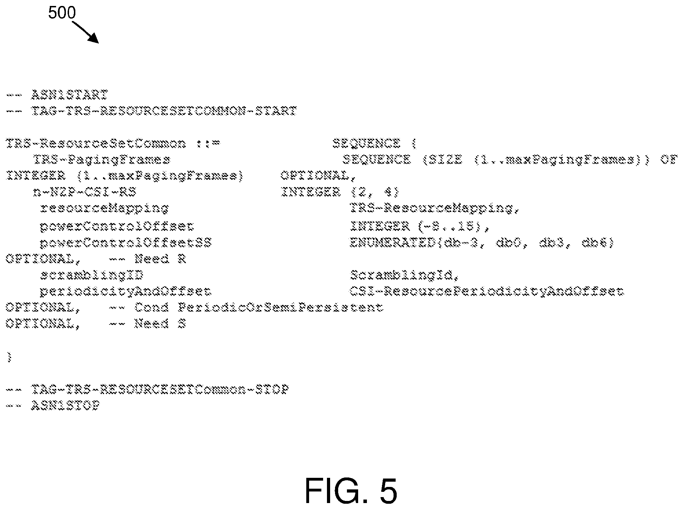

In a third example (Example 3), there may be another common parameter (TRS-ResourceSetCommon). The IE TRS-ResourceSetCommon is used to cell-specifically configure a set of NZP CSI-RS resources in the cell where the IE is included which an idle or inactive UE may be configured to measure on. A change of configuration between periodic and aperiodic for a TRS-ResourceSet may be supported. Figure 5 is a schematic block diagram 500 illustrating another embodiment of a TRS-ResourceSetCommon IE.

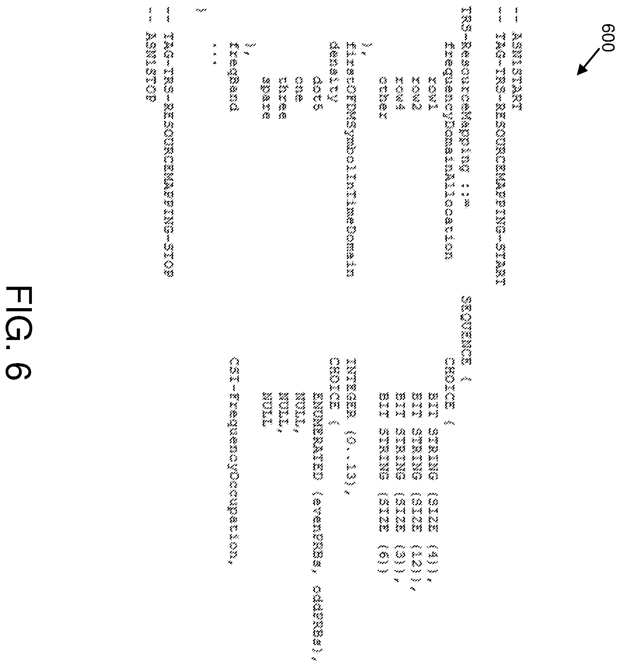

In a fourth example (Example 4), there may be a resource mapping (TRS-ResourceMapping). An IE TRS-ResourceMapping may used to configure resource element mapping for at least one TRS resource in a time and a frequency domain. Figure 6 is a schematic block diagram 600 illustrating one embodiment of a TRS-ResourceMapping IE.

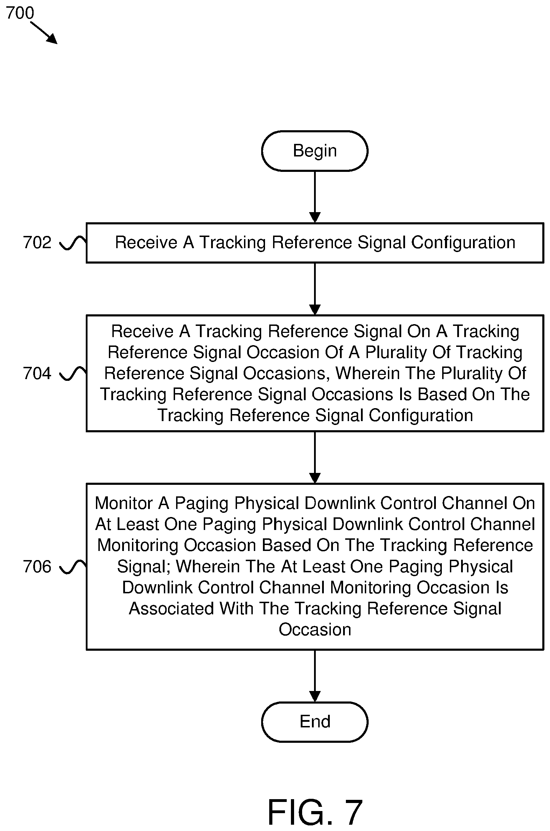

Figure 7 is a flow chart diagram illustrating one embodiment of a method 700 for tracking reference signal configuration. In some embodiments, the method 700 is performed by an apparatus, such as the remote unit 102. In certain embodiments, the method 700 may be performed by a processor executing program code, for example, a microcontroller, a microprocessor, a CPU, a GPU, an auxiliary processing unit, a FPGA, or the like.

In various embodiments, the method 700 includes receiving 702 a tracking reference signal configuration. In some embodiments, the method 700 includes receiving 704 a tracking reference signal on a tracking reference signal occasion of a plurality of tracking reference signal occasions. The plurality of tracking reference signal occasions is based on the tracking reference signal configuration. In certain embodiments, the method 700 includes monitoring 706 a paging physical downlink control channel on at least one paging physical downlink control channel monitoring occasion based on the tracking reference signal. The at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions. In some embodiments, the method 700 further comprises: receiving first information for a first non-zero power channel state information reference signal resource of the tracking reference signal configuration; and determining second information for a second non-zero power channel state information reference signal resource of the tracking reference signal configuration based on the first information. In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block. In certain embodiments: assuming that the plurality of tracking reference signal occasions includes a plurality of tracking reference signal transmitted by a network entity; wherein receiving the tracking reference signal comprises receiving the tracking reference signal on the tracking reference signal occasion based on the assumption that the plurality of tracking reference signal occasions includes the plurality of tracking reference signal transmitted by the network entity.

In some embodiments, the method 700 further comprises: receiving information indicating whether the tracking reference signal is transmitted on the tracking reference signal occasion by a network entity; wherein receiving the tracking reference signal comprises receiving the tracking reference signal on the tracking reference signal occasion in response to the tracking reference signal being transmitted on the tracking reference signal occasion by the network entity.

In various embodiments, the method 700 further comprises: receiving a paging power saving physical downlink control channel configuration, wherein the paging power saving physical downlink control channel configuration includes a paging power saving physical downlink control channel monitoring configuration; and receiving a paging power saving physical downlink control channel based on the paging power saving physical downlink control channel monitoring configuration; wherein the paging power saving physical downlink control channel provides information of an availability of the tracking reference signal on the tracking reference signal occasion.

In one embodiment, the tracking reference signal and the paging power saving physical downlink control channel are quasi-co-located. In certain embodiments, the tracking reference signal configuration is a cell specific tracking reference signal configuration, and the tracking reference signal configuration is received via a system information block or a dedicated radio resource control message. In some embodiments, the plurality of tracking reference signal occasions is determined based on a periodicity, a slot offset, or a combination thereof.

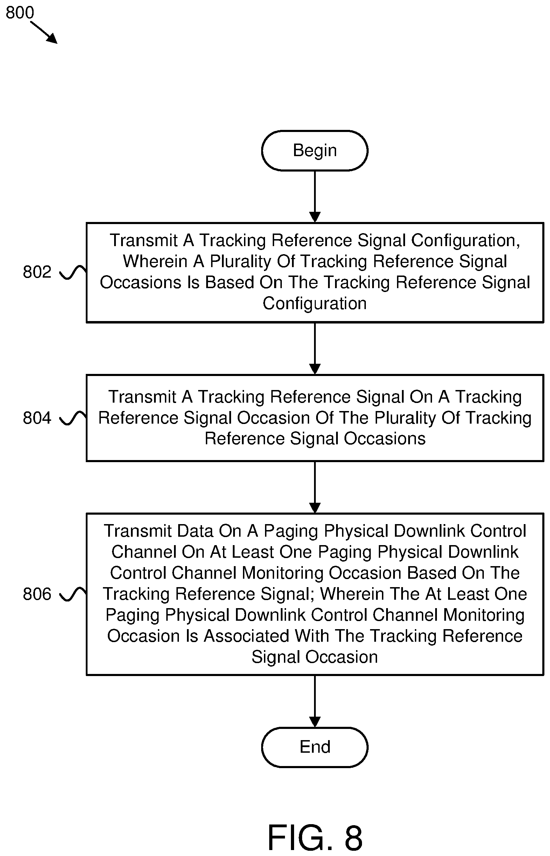

Figure 8 is a flow chart diagram illustrating another embodiment of a method 800 for tracking reference signal configuration. In some embodiments, the method 800 is performed by an apparatus, such as the network unit 104. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes transmitting 802 a tracking reference signal configuration. A plurality of tracking reference signal occasions is based on the tracking reference signal configuration. In some embodiments, the method 800 includes transmitting 804 a tracking reference signal on a tracking reference signal occasion of the plurality of tracking reference signal occasions. In certain embodiments, the method 800 includes transmitting 806 data on a paging physical downlink control channel on at least one paging physical downlink control channel monitoring occasion based on the tracking reference signal. The at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions. In some embodiments, the method 800 further comprises: transmitting first information for a first non-zero power channel state information reference signal resource of the tracking reference signal configuration, wherein second information for a second non-zero power channel state information reference signal resource of the tracking reference signal configuration is based on the first information. In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block. In certain embodiments, the plurality of tracking reference signal occasions is assumed to include a plurality of tracking reference signal transmitted by the network entity, and transmitting the tracking reference signal comprises transmitting the tracking reference signal on the tracking reference signal occasion based on the assumption that the plurality of tracking reference signal occasions include the plurality of tracking reference signal transmitted by the network entity. In some embodiments, the method 800 further comprises: transmitting information indicating whether the tracking reference signal is transmitted on the tracking reference signal occasion by a network entity; wherein transmitting the tracking reference signal comprises transmitting the tracking reference signal on the tracking reference signal occasion in response to the tracking reference signal being transmitted on the tracking reference signal occasion by the network entity.

In various embodiments, the method 800 further comprises: transmitting a paging power saving physical downlink control channel configuration, wherein the paging power saving physical downlink control channel configuration includes a paging power saving physical downlink control channel monitoring configuration; and transmitting a paging power saving physical downlink control channel based on the paging power saving physical downlink control channel monitoring configuration; wherein the paging power saving physical downlink control channel provides information of an availability of the tracking reference signal on the tracking reference signal occasion. In one embodiment, the tracking reference signal and the paging power saving physical downlink control channel are quasi-co-located. In certain embodiments, the tracking reference signal configuration is a cell specific tracking reference signal configuration, and the tracking reference signal configuration is transmitted via a system information block or a dedicated radio resource control message. In some embodiments, the plurality of tracking reference signal occasions is based on a periodicity, a slot offset, or a combination thereof.

In one embodiment, a method of a user equipment comprises: receiving a tracking reference signal configuration; receiving a tracking reference signal on a tracking reference signal occasion of a plurality of tracking reference signal occasions, wherein the plurality of tracking reference signal occasions is based on the tracking reference signal configuration; and monitoring a paging physical downlink control channel on at least one paging physical downlink control channel monitoring occasion based on the tracking reference signal; wherein the at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions.

In some embodiments, the method further comprises: receiving first information for a first non-zero power channel state information reference signal resource of the tracking reference signal configuration; and determining second information for a second non-zero power channel state information reference signal resource of the tracking reference signal configuration based on the first information.

In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block.

In certain embodiments: assuming that the plurality of tracking reference signal occasions includes a plurality of tracking reference signal transmitted by a network entity; wherein receiving the tracking reference signal comprises receiving the tracking reference signal on the tracking reference signal occasion based on the assumption that the plurality of tracking reference signal occasions includes the plurality of tracking reference signal transmitted by the network entity.

In some embodiments, the method further comprises: receiving information indicating whether the tracking reference signal is transmitted on the tracking reference signal occasion by a network entity; wherein receiving the tracking reference signal comprises receiving the tracking reference signal on the tracking reference signal occasion in response to the tracking reference signal being transmitted on the tracking reference signal occasion by the network entity.

In various embodiments, the method further comprises: receiving a paging power saving physical downlink control channel configuration, wherein the paging power saving physical downlink control channel configuration includes a paging power saving physical downlink control channel monitoring configuration; and receiving a paging power saving physical downlink control channel based on the paging power saving physical downlink control channel monitoring configuration; wherein the paging power saving physical downlink control channel provides information of an availability of the tracking reference signal on the tracking reference signal occasion.

In one embodiment, the tracking reference signal and the paging power saving physical downlink control channel are quasi-co-located.

In certain embodiments, the tracking reference signal configuration is a cell specific tracking reference signal configuration, and the tracking reference signal configuration is received via a system information block or a dedicated radio resource control message.

In some embodiments, the plurality of tracking reference signal occasions is determined based on a periodicity, a slot offset, or a combination thereof.

In one embodiment, an apparatus comprises a user equipment. The apparatus further comprises: a receiver that: receives a tracking reference signal configuration; and receives a tracking reference signal on a tracking reference signal occasion of a plurality of tracking reference signal occasions, wherein the plurality of tracking reference signal occasions is based on the tracking reference signal configuration; and a processor that monitors a paging physical downlink control channel on at least one paging physical downlink control channel monitoring occasion based on the tracking reference signal; wherein the at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions.

In some embodiments: the receiver receives first information for a first non-zero power channel state information reference signal resource of the tracking reference signal configuration; and the processor determines second information for a second non-zero power channel state information reference signal resource of the tracking reference signal configuration based on the first information.

In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block.

In certain embodiments: the processor assumes that the plurality of tracking reference signal occasions includes a plurality of tracking reference signal transmitted by a network entity; and the receiver receiving the tracking reference signal comprises the receiver receiving the tracking reference signal on the tracking reference signal occasion based on the assumption that the plurality of tracking reference signal occasions includes the plurality of tracking reference signal transmitted by the network entity.

In some embodiments: the receiver receives information indicating whether the tracking reference signal is transmitted on the tracking reference signal occasion by a network entity; and the receiver receiving the tracking reference signal comprises the receiver receiving the tracking reference signal on the tracking reference signal occasion in response to the tracking reference signal being transmitted on the tracking reference signal occasion by the network entity.

In various embodiments: the receiver receives a paging power saving physical downlink control channel configuration, wherein the paging power saving physical downlink control channel configuration includes a paging power saving physical downlink control channel monitoring configuration; the receiver receives a paging power saving physical downlink control channel based on the paging power saving physical downlink control channel monitoring configuration; and the paging power saving physical downlink control channel provides information of an availability of the tracking reference signal on the tracking reference signal occasion.

In one embodiment, the tracking reference signal and the paging power saving physical downlink control channel are quasi-co-located.

In certain embodiments, the tracking reference signal configuration is a cell specific tracking reference signal configuration, and the tracking reference signal configuration is received via a system information block or a dedicated radio resource control message.

In some embodiments, the plurality of tracking reference signal occasions is determined based on a periodicity, a slot offset, or a combination thereof.

In one embodiment, a method of a network entity comprises: transmitting a tracking reference signal configuration, wherein a plurality of tracking reference signal occasions is based on the tracking reference signal configuration; transmitting a tracking reference signal on a tracking reference signal occasion of the plurality of tracking reference signal occasions; and transmitting data on a paging physical downlink control channel on at least one paging physical downlink control channel monitoring occasion based on the tracking reference signal; wherein the at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions.

In some embodiments, the method further comprises: transmitting first information for a first non-zero power channel state information reference signal resource of the tracking reference signal configuration, wherein second information for a second non-zero power channel state information reference signal resource of the tracking reference signal configuration is based on the first information.

In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block.

In certain embodiments, the plurality of tracking reference signal occasions is assumed to include a plurality of tracking reference signal transmitted by the network entity, and transmitting the tracking reference signal comprises transmitting the tracking reference signal on the tracking reference signal occasion based on the assumption that the plurality of tracking reference signal occasions include the plurality of tracking reference signal transmitted by the network entity.

In some embodiments, the method further comprises: transmitting information indicating whether the tracking reference signal is transmitted on the tracking reference signal occasion by a network entity; wherein transmitting the tracking reference signal comprises transmitting the tracking reference signal on the tracking reference signal occasion in response to the tracking reference signal being transmitted on the tracking reference signal occasion by the network entity.

In various embodiments, the method further comprises: transmitting a paging power saving physical downlink control channel configuration, wherein the paging power saving physical downlink control channel configuration includes a paging power saving physical downlink control channel monitoring configuration; and transmitting a paging power saving physical downlink control channel based on the paging power saving physical downlink control channel monitoring configuration; wherein the paging power saving physical downlink control channel provides information of an availability of the tracking reference signal on the tracking reference signal occasion.

In one embodiment, the tracking reference signal and the paging power saving physical downlink control channel are quasi-co-located.

In certain embodiments, the tracking reference signal configuration is a cell specific tracking reference signal configuration, and the tracking reference signal configuration is transmitted via a system information block or a dedicated radio resource control message.

In some embodiments, the plurality of tracking reference signal occasions is based on a periodicity, a slot offset, or a combination thereof.

In one embodiment, an apparatus comprises a network entity. The apparatus further comprises: a transmitter that: transmits a tracking reference signal configuration, wherein a plurality of tracking reference signal occasions is based on the tracking reference signal configuration; transmits a tracking reference signal on a tracking reference signal occasion of the plurality of tracking reference signal occasions; and transmits data on a paging physical downlink control channel on at least one paging physical downlink control channel monitoring occasion based on the tracking reference signal; wherein the at least one paging physical downlink control channel monitoring occasion is associated with the tracking reference signal occasion.

In certain embodiments, each paging frame of a plurality of paging frames in a discontinuous reception cycle is associated with at least one tracking reference signal occasion of the plurality of tracking reference signal occasions.

In some embodiments: the transmitter transmits first information for a first non-zero power channel state information reference signal resource of the tracking reference signal configuration, wherein second information for a second non-zero power channel state information reference signal resource of the tracking reference signal configuration is based on the first information.

In various embodiments, the first information comprises time domain mapping information of the first non-zero power channel state information reference signal resource, frequency domain mapping information of the first non-zero power channel state information reference signal resource, a scrambling identity, at least one downlink power control parameter, or some combination thereof.

In one embodiment, the at least one paging physical downlink control channel monitoring occasion and the tracking reference signal occasion are quasi-co-located with a synchronization signal block.

In certain embodiments, the plurality of tracking reference signal occasions is assumed to include a plurality of tracking reference signal transmitted by the network entity, and transmitting the tracking reference signal comprises transmitting the tracking reference signal on the tracking reference signal occasion based on the assumption that the plurality of tracking reference signal occasions include the plurality of tracking reference signal transmitted by the network entity.

In some embodiments: the transmitter transmits information indicating whether the tracking reference signal is transmitted on the tracking reference signal occasion by a network entity; and the transmitter transmitting the tracking reference signal comprises the transmitter transmitting the tracking reference signal on the tracking reference signal occasion in response to the tracking reference signal being transmitted on the tracking reference signal occasion by the network entity.

In various embodiments: the transmitter transmits a paging power saving physical downlink control channel configuration, wherein the paging power saving physical downlink control channel configuration includes a paging power saving physical downlink control channel monitoring configuration; the transmitter transmits a paging power saving physical downlink control channel based on the paging power saving physical downlink control channel monitoring configuration; and the paging power saving physical downlink control channel provides information of an availability of the tracking reference signal on the tracking reference signal occasion.

In one embodiment, the tracking reference signal and the paging power saving physical downlink control channel are quasi-co-located.

In certain embodiments, the tracking reference signal configuration is a cell specific tracking reference signal configuration, and the tracking reference signal configuration is transmitted via a system information block or a dedicated radio resource control message.

In some embodiments, the plurality of tracking reference signal occasions is based on a periodicity, a slot offset, or a combination thereof.

Embodiments may be practiced in other specific forms. The described embodiments are to be considered in all respects only as illustrative and not restrictive. The scope of the invention is, therefore, indicated by the appended claims rather than by the foregoing description.

**Claims**

1. A user equipment, UE, (102) for wireless communication, the UE (102) comprising:

   at least one memory (204); and
   at least one processor (202) coupled with the at least one memory (204) and configured to cause the UE (102) to:

      receive (702) a tracking reference signal, TRS, configuration;
      receive first information for a first non-zero power channel state information reference signal, NZP-CSI-RS, resource of the TRS configuration, the first information comprises time domain mapping information of the first NZP-CSI-RS resource;
      determine second information for a second NZP-CSI-RS resource of the TRS configuration based on the time domain mapping information of the first NZP-CSI-RS resource;
receive (704) a TRS on a TRS occasion of a plurality of TRS occasions, wherein the plurality of TRS occasions is based on the TRS configuration and is determined based on at least one of a periodicity or a slot offset of the NZP-CSI-RS resources; and
monitor (706) a paging physical downlink control channel, PDCCH, on at least one paging PDCCH monitoring occasion based on the TRS;
wherein the at least one paging PDCCH monitoring occasion is associated with the TRS occasion.

2. The UE (102) of claim 1, wherein each paging frame, PF, of a plurality of PFs in a discontinuous reception, DRX, cycle is associated with at least one TRS occasion of the plurality of TRS occasions.

3. The UE (102) of claim 1, wherein the first information further comprises at least one of frequency domain mapping information of the first NZP-CSI-RS resource, a scrambling identity, or at least one downlink power control parameter.

4. The UE (102) of claim 1, wherein the at least one paging PDCCH monitoring occasion and the TRS occasion are quasi-co-located, QCL'd, with a synchronization signal block, SSB.

5. The UE (102) of claim 1, wherein the at least one processor (202) is configured to cause the UE (102) to:

   assume that the plurality of TRS occasions includes a plurality of TRS transmitted by a network entity;
   wherein the at least one processor (202) is configured to cause the UE (102) to receive the TRS by receiving the TRS on the TRS occasion based on the assumption that the plurality of TRS occasions includes the plurality of TRS transmitted by the network entity.

6. The UE (102) of claim 1, wherein the at least one processor (202) is configured to cause the UE (102) to:

   receive information indicating whether the TRS is transmitted on the TRS occasion by a network entity;
   wherein the at least one processor (202) is configured to cause the UE (102) to receive the TRS by receiving the TRS on the TRS occasion in response to the TRS being transmitted on the TRS occasion by the network entity.

7. The UE (102) of claim 1, wherein the at least one processor (202) is configured to cause the UE (102) to:

receive a paging power saving physical downlink control channel, PPS-PDCCH, configuration, wherein the PPS-PDCCH configuration includes a PPS-PDCCH monitoring configuration; and
receive a PPS-PDCCH based on the PPS-PDCCH configuration;
wherein the PPS-PDCCH provides information of an availability of the TRS on the TRS occasion.

8. The UE (102) of claim 7, wherein the TRS and the PPS-PDCCH are QCL'd.

9. The UE (102) of claim 1, wherein the TRS configuration is a cell specific TRS configuration, and the TRS configuration is received via a system information block or a dedicated radio resource control, RRC, message.

10. A method performed by a user equipment, UE, (102), the method comprising:

receiving (702) a tracking reference signal, TRS, configuration;
receiving first information for a first non-zero power channel state information reference signal, NZP-CSI-RS, resource of the TRS configuration, the first information comprises time domain mapping information of the first NZP-CSI-RS resource;
determining second information for a second NZP-CSI-RS resource of the TRS configuration based on the time domain mapping information of the first NZP-CSI-RS resource;
receiving (704) a TRS on a TRS occasion of a plurality of TRS occasions, wherein the plurality of TRS occasions is based on the TRS configuration and is determined based on at least one of a periodicity or a slot offset of the NZP-CSI-RS resources; and
monitoring (706) a paging physical downlink control channel, PDCCH, on at least one paging PDCCH monitoring occasion based on the TRS;
wherein the at least one paging PDCCH monitoring occasion is associated with the TRS occasion.

**Patentansprüche**

1. Benutzergerät, UE, (102) zur drahtlosen Kommunikation, das UE (102) umfassend:

mindestens einen Speicher (204); und
mindestens einen Prozessor (202), der mit dem mindestens einen Speicher (204) gekoppelt und so konfiguriert ist, dass er das UE zu Folgendem veranlasst:

Empfangen (702) einer TRS-Konfiguration - Tracking Reference Signal;
Empfangen erster Informationen für eine erste NZP-CSI-RS-Ressource - Non-Zero Power Channel State Information Reference Signal der TRS-Konfiguration, wobei die ersten Informationen Zeitbereichsabbildungsinformationen der ersten NZP-CSI-RS-Ressource umfassen;
Bestimmen von zweiten Informationen für eine zweite NZP-CSI-RS-Ressource der TRS-Konfiguration auf der Grundlage der Zeitbereichsabbildungsinformationen der ersten NZP-CSI-RS-Ressource;
Empfangen (704) eines TRS bei einer TRS-Gelegenheit aus einer Vielzahl von TRS-Gelegenheiten, wobei die Vielzahl von TRS-Gelegenheiten auf der TRS-Konfiguration basiert und auf der Grundlage mindestens einer der folgenden Größen bestimmt wird: einer Periodizität oder eines Slot-Offsets der NZP-CSI-RS-Ressourcen; und
Überwachen (706) eines physikalischen Paging-Downlink-Steuerkanals (PDCCH) bei mindestens einer Paging-PDCCH-Überwachungsgelegenheit auf der Grundlage des TRS;
wobei die mindestens eine Paging-PDCCH-Überwachungsgelegenheit der TRS-Gelegenheit zugeordnet ist.

2. UE (102) nach Anspruch 1, wobei jeder Paging-Frame - PF einer Vielzahl von PFs in einem diskontinuierlichen Empfangszyklus - DRX mindestens einer TRS-Gelegenheit der Vielzahl von TRS-Gelegenheiten zugeordnet ist.

3. UE (102) nach Anspruch 1, wobei die ersten Informationen ferner mindestens eine der folgenden Informationen umfassen: Frequenzbereichsabbildungsinformationen der ersten NZP-CSI-RS-Ressource, eine Scrambling-Identität oder mindestens einen Downlink-Leistungssteuerungsparameter.

4. UE (102) nach Anspruch 1, wobei die mindestens eine Paging-PDCCH-Überwachungsgelegenheit und die TRS-Gelegenheit mit einem Synchronisationssignalblock - SSB quasi-kolokalisiert - QCL sind.

5. UE (102) nach Anspruch 1, wobei der mindestens eine Prozessor (202) so konfiguriert ist, dass er das UE (102) zu Folgendem veranlasst:

Annehmen, dass die Vielzahl von TRS-Gelegenheiten eine Vielzahl von TRS einschließt, die von einer Netzwerkeinheit übertragen werden;
wobei der mindestens eine Prozessor (202) so konfiguriert ist, dass er das UE (102) veranlasst, das TRS zu empfangen, indem er das TRS bei der TRS-Gelegenheit empfängt, basierend auf der Annahme, dass die Vielzahl von TRS-Gelegenheiten die Vielzahl von TRS einschließt, die von der Netzwerkeinheit übertragen werden.

6. UE (102) nach Anspruch 1, wobei der mindestens eine Prozessor (202) so konfiguriert ist, dass er das UE (102) zu Folgendem veranlasst:

Empfangen von Informationen, die angeben, ob das TRS bei der TRS-Gelegenheit von einer Netzwerkeinheit übertragen wird;
wobei der mindestens eine Prozessor (202) so konfiguriert ist, dass er das UE (102) veranlasst, das TRS zu empfangen, indem er das TRS bei der TRS-Gelegenheit empfängt, als Reaktion darauf, dass das TRS bei der TRS-Gelegenheit von der Netzwerkeinheit übertragen wird.

7. UE (102) nach Anspruch 1, wobei der mindestens eine Prozessor (202) so konfiguriert ist, dass er das UE (102) zu Folgendem veranlasst:

Empfangen einer Konfiguration des Paging Power Saving Physical Downlink Control Channel - PPS-PDCCH, wobei die PPS-PDCCH-Konfiguration eine PPS-PDCCH-Überwachungskonfiguration einschließt; und
Empfangen eines PPS-PDCCH auf der Grundlage der PPS-PDCCH-Konfiguration; wobei der PPS-PDCCH Informationen über die Verfügbarkeit des TRS bei der TRS-Gelegenheit bereitstellt.

8. UE (102) nach Anspruch 7, wobei der TRS und der PPS-PDCCH quasi-kolokalisiert sind.

9. UE (102) nach Anspruch 1, wobei die TRS-Konfiguration eine zellenspezifische TRS-Konfiguration ist und die TRS-Konfiguration über einen Systeminformationsblock oder eine dedizierte Funkressourcensteuerungs-Nachricht, RRC, empfangen wird.

10. Verfahren, das von einem Benutzergerät, UE, (102) durchgeführt wird, das Verfahren umfassend:

Empfangen (702) einer TRS-Konfiguration - Tracking Reference Signal; Empfangen erster Informationen für eine erste NZP-CSI-RS-Ressource - Non-Zero Power Channel State Information Reference Signal der TRS-Konfiguration, wobei die ersten Informationen Zeitbereichsabbildungsinformationen der ersten NZP-CSI-RS-Ressource umfassen;
Bestimmen von zweiten Informationen für eine zweite NZP-CSI-RS-Ressource der TRS-Konfiguration auf der Grundlage der Zeitbereichsabbildungsinformationen der ersten NZP-CSI-RS-Ressource;
Empfangen (704) eines TRS bei einer TRS-Gelegenheit aus einer Vielzahl von TRS-Gelegenheiten,
wobei die Vielzahl von TRS-Gelegenheiten auf der TRS-Konfiguration basiert und auf der Grundlage mindestens einer der folgenden Größen bestimmt wird: einer Periodizität oder eines Slot-Offsets der NZP-CSI-RS-Ressourcen; und
Überwachen (706) eines physikalischen Paging-Downlink-Steuerkanals (PDCCH) bei mindestens einer Paging-PDCCH-Überwachungsgelegenheit auf der Grundlage des TRS; wobei die mindestens eine Paging-PDCCH-Überwachungsgelegenheit der TRS-Gelegenheit zugeordnet ist.

**Revendications**

1. Équipement utilisateur, UE, (102) pour communication sans fil, l'UE (102) comprenant :

au moins une mémoire (204) ; et
au moins un processeur (202) couplé à l'au moins une mémoire (204) et configuré pour amener l'UE (102) à :

recevoir (702) une configuration de signaux de référence de suivi, TRS (pour « tracking reference signal ») ;
recevoir des premières informations pour une première ressource de signal de référence d'état de canal de puissance non nulle, NZP-CSI-RS (pour « non-zero power channel state information reference signal »), de la configuration TRS, les premières informations comprenant des informations de mappage dans le domaine temporel de la première ressource NZP-CSI-RS ;
déterminer des secondes informations pour une seconde ressource NZP-CSI-RS de la configuration TRS sur la base des informations de mappage dans le domaine temporel de la première ressource NZP-CSI-RS ; recevoir (704) un TRS lors d'un événement TRS parmi une pluralité d'événements TRS, la pluralité d'événements TRS étant basée sur la configuration TRS et étant déterminée sur la base d'au moins l'un parmi une périodicité ou un décalage de créneau des ressources NZP-CSI-RS ; et surveiller (706) un canal physique de commande de liaison descendante, PDCCH, de radiomessagerie lors d'au moins un événement de surveillance de PDCCH de radiomessagerie sur la base du TRS ;

dans lequel l'au moins un événement de surveillance de PDCCH de radiomessagerie est associé à l'événement TRS.

2. UE (102) selon la revendication 1, dans lequel chaque trame de radiomessagerie, PF (pour « paging frame »), parmi une pluralité de PF dans un cycle de réception discontinue, DRX (pour « discontinuous reception »), est associée à au moins un événement TRS parmi la pluralité d'événements TRS.

3. UE (102) selon la revendication 1, dans lequel les premières informations comprennent en outre au moins l'un parmi des informations de mappage dans le domaine temporel de la première ressource NZP-CSI-RS, une identité de brouillage, ou au moins un paramètre de commande de puissance de liaison descendante.

4. UE (102) selon la revendication 1, dans lequel l'au moins un événement de surveillance de PDCCH de radiomessagerie et l'événement TRS sont quasi-colocalisés, QCL'd (pour « quasi-co-located »), avec un bloc de signal de synchronisation, SSB (pour « synchronization signal block »).

5. UE (102) selon la revendication 1, dans lequel l'au moins un processeur (202) est configuré pour amener l'UE (102) à :

supposer que la pluralité d'événements TRS comprend une pluralité de TRS transmis par une entité de réseau ;
dans lequel l'au moins un processeur (202) est configuré pour amener l'UE (102) à recevoir les TRS en recevant le TRS lors de l'événement TRS sur la base de l'hypothèse selon laquelle la pluralité d'événements TRS comprend la pluralité de TRS transmis par l'entité de réseau.

6. UE (102) selon la revendication 1, dans lequel l'au moins un processeur (202) est configuré pour amener l'UE (102) à :

recevoir des informations indiquant si le TRS est transmis lors de l'événement TRS par une entité de réseau ;
dans lequel l'au moins un processeur (202) est configuré pour amener l'UE (102) à recevoir le TRS en recevant le TRS lors de l'événement TRS en réponse à la transmission du TRS lors de l'événement TRS par l'entité de réseau.

7. UE (102) selon la revendication 1, dans lequel l'au moins un processeur (202) est configuré pour amener l'UE (102) à :

recevoir une configuration de canal de commande physique de liaison descendante à économie d'énergie pour la radiomessagerie, PPS-PDCCH (pour « paging power saving physical downlink control channel »), la configuration PPS-PDCCH comprenant une configuration de surveillance de PPS-PDCCH ; et
recevoir un PPS-PDCCH sur la base de la configuration PPS-PDCCH ;
dans lequel le PPS-PDCCH fournit des informations concernant la disponibilité du TRS lors de l'événement TRS.

8. UE (102) selon la revendication 7, dans lequel le TRS et le PPS-PDCCH sont QCL'd.

9. UE (102) selon la revendication 1, dans lequel la configuration TRS est une configuration TRS spécifique à la cellule, et la configuration TRS est reçue via un bloc d'informations système ou un message de commande de ressources radio, RRC (pour « Radio Resource Control ») dédié.

10. Procédé réalisé par un équipement utilisateur, UE, (102), ledit procédé comprenant :

la réception (702) d'une configuration de signaux de référence de suivi, TRS (pour « tracking reference signal ») ;
la réception de premières informations pour une première ressource de signal de référence d'état de canal de puissance non nulle, NZP-CSI-RS (pour « non-zero power channel state information reference signal »), de la configuration TRS, les premières informations comprenant des informations de mappage dans le domaine temporel de la première ressource NZP-CSI-RS ;
la détermination de secondes informations pour une seconde ressource NZP-CSI-RS de la configuration TRS sur la base des informations de mappage dans le domaine temporel de la première ressource NZP-CSI-RS ;

la réception (704) d'un TRS lors d'un événement TRS parmi une pluralité d'événements TRS, la pluralité d'événements TRS étant basée sur la configuration TRS et étant déterminée sur la base d'au moins l'un parmi une périodicité ou un décalage de créneau des ressources NZP-CSI-RS ; et

la surveillance (706) d'un canal physique de commande de liaison descendante, PDCCH, de radiomessagerie lors d'au moins un événement de surveillance de PDCCH de radiomessagerie sur la base du TRS ;

dans lequel l'au moins un événement de surveillance de PDCCH de radiomessagerie est associé à l'événement TRS.

FIG. 1

200

Remote Unit
102

Processor
202

Memory
204

Input Device
206

Display
208

Transmitter
210

Receiver
212

FIG. 2

300

Network Unit
104

Processor
302

Memory
304

Input Device
306

Display
308

Transmitter
310

Receiver
312

FIG. 3

400

```
-- ASN1START
-- TAG-TRS-RESOURCESETCOMMON-START

TRS-ResourceSetCommon ::=              SEQUENCE {
    TRS-PagingFrames                   SEQUENCE (SIZE (1..maxPagingFrames)) OF
INTEGER (1..maxPagingFrames)    OPTIONAL,
    TRS-PagingOccasions                SEQUENCE (SIZE (1..maxPO-perPF)) OF
INTEGER (1..maxPO-perPF),        OPTIONAL,
    n-NZP-CSI-RS                       INTEGER {2, 4}
    resourceMapping                    TRS-ResourceMapping,
    powerControlOffset                 INTEGER (-8..15),
    powerControlOffsetSS               ENUMERATED{db-3, db0, db3, db6}
OPTIONAL,    -- Need R
    scramblingID                       ScramblingId,
    offset-PO                       INTEGER(1..4)
OPTIONAL,    -- Need S

}

-- TAG-TRS-RESOURCESETCommon-STOP
```

# FIG. 4

500

```
-- ASN1START
-- TAG-TRS-RESOURCESETCOMMON-START

TRS-ResourceSetCommon ::=                SEQUENCE {
    TRS-PagingFrames                      SEQUENCE (SIZE (1..maxPagingFrames)) OF
INTEGER (1..maxPagingFrames)    OPTIONAL,
    n-NZP-CSI-RS                         INTEGER {2, 4}
    resourceMapping                          TRS-ResourceMapping,
    powerControlOffset                       INTEGER (-8..15),
    powerControlOffsetSS                     ENUMERATED{db-3, db0, db3, db6}
OPTIONAL,   -- Need R
    scramblingID                             ScramblingId,
    periodicityAndOffset                     CSI-ResourcePeriodicityAndOffset
OPTIONAL,    -- Cond PeriodicOrSemiPersistent
OPTIONAL,    -- Need S

}

-- TAG-TRS-RESOURCESETCommon-STOP
-- ASN1STOP
```

# FIG. 5

600

```
-- ASN1START
-- TAG-TRS-RESOURCEMAPPING-START

TRS-ResourceMapping ::=          SEQUENCE {
    frequencyDomainAllocation        CHOICE {
        row1                             BIT STRING (SIZE (4)),
        row2                             BIT STRING (SIZE (12)),
        row4                             BIT STRING (SIZE (3)),
        other                            BIT STRING (SIZE (6))
    },
    firstOFDMSymbolInTimeDomain      INTEGER (0..13),
    density                          CHOICE {
        dot5                             ENUMERATED (evenPRBs, oddPRBs),
        one                              NULL,
        three                            NULL,
        spare                            NULL
    },
    freqBand                         CSI-FrequencyOccupation,
    ...
}

-- TAG-TRS-RESOURCEMAPPING-STOP
-- ASN1STOP
```

# FIG. 6

700

Begin

702 — Receive A Tracking Reference Signal Configuration

704 — Receive A Tracking Reference Signal On A Tracking Reference Signal Occasion Of A Plurality Of Tracking Reference Signal Occasions, Wherein The Plurality Of Tracking Reference Signal Occasions Is Based On The Tracking Reference Signal Configuration

706 — Monitor A Paging Physical Downlink Control Channel On At Least One Paging Physical Downlink Control Channel Monitoring Occasion Based On The Tracking Reference Signal; Wherein The At Least One Paging Physical Downlink Control Channel Monitoring Occasion Is Associated With The Tracking Reference Signal Occasion

End

# FIG. 7

800

```
            ( Begin )
                |
                v
```

802 〜 | Transmit A Tracking Reference Signal Configuration, Wherein A Plurality Of Tracking Reference Signal Occasions Is Based On The Tracking Reference Signal Configuration

```
                |
                v
```

804 〜 | Transmit A Tracking Reference Signal On A Tracking Reference Signal Occasion Of The Plurality Of Tracking Reference Signal Occasions

```
                |
                v
```

806 〜 | Transmit Data On A Paging Physical Downlink Control Channel On At Least One Paging Physical Downlink Control Channel Monitoring Occasion Based On The Tracking Reference Signal; Wherein The At Least One Paging Physical Downlink Control Channel Monitoring Occasion Is Associated With The Tracking Reference Signal Occasion

```
                |
                v
            (  End  )
```

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CATT**. Configuration of TRS/CSI-RS for paging enhancement. *R1-2005720, 3GPP TSG RAN WG1 #102, e-Meeting*, 17 August 2020

- **SAMSUNG**. Summary for TRS/CSI-RS occasion(s) for idle/inactive UEs. *R1-2007475, 3GPP TSG RAN WG1 #102, e-Meeting*, 17 August 2020